**Europäisches Patentamt**

**European Patent Office**

**Office européen des brevets**

(19)

(11) Veröffentlichungsnummer: **0 066 297**
**B1**

(12) # EUROPÄISCHE PATENTSCHRIFT

(45) Veröffentlichungstag der Patentschrift:
**16.10.85**

(51) Int. Cl.⁴: **B 62 D 27/06**, E 05 C 1/12

(21) Anmeldenummer: **82104832.9**

(22) Anmeldetag: **02.06.82**

(54) **Riegelverschluss für Türen, Klappen oder dergleichen von Nutzfahrzeugen.**

(30) Priorität: **02.06.81 DE 3121850**

(43) Veröffentlichungstag der Anmeldung:
**08.12.82 Patentblatt 82/49**

(45) Bekanntmachung des Hinweises auf die Patenterteilung:
**16.10.85 Patentblatt 85/42**

(84) Benannte Vertragsstaaten:
**AT BE CH DE FR GB IT LI LU NL SE**

(56) Entgegenhaltungen:
**EP - A - 0 026 805**
**CH - A - 413 617**
**DD - A - 55 561**
**DE - U - 1 607 143**
**DE - U - 1 939 468**
**GB - A - 1 203 573**

(73) Patentinhaber: **F. HESTERBERG & SÖHNE GmbH & Co. KG, Heilenbecker Strasse 50-60,**
**D-5828 Ennepetal 1 (DE)**

(72) Erfinder: **Nieland, Friedhelm, Bonkampstrasse 40,**
**D-5805 Breckerfeld (DE)**

(74) Vertreter: **Kneissl, Richard, Dr., Patentanwälte Andrae, Flach, Haug, Kneissl Steinstrasse 44,**
**D-8000 München 80 (DE)**

## Beschreibung

Die Erfindung betrifft einen Riegelverschluss für Türen, Klappen oder dergleichen von Nutzfahrzeugen, mit einem in einer Einbauwanne linear geführten und durch einen Kniehebel betätigbaren Riegel, der durch eine Schraubendruckfeder abgestützt ist und an seinem Vorderende eine Keilfläche aufweist, wobei ein Kniehebelteil am Riegel und das andere Kniehebelteil in der Einbauwanne angelenkt ist und das Kniegelenk in Schliessstellung eine Übertotpunktlage einnimmt.

Ein Riegelverschluss der vorstehend genannten Art ist aus den Figuren 1 bis 4 und der zugehörigen Beschreibung der EP-A-26 805 bekannt. Dieser Verschluss ist für den Einbau in eine Runge eines Kipperaufbaus vorgesehen und dient zum Verriegeln eines Pendelzapfens, der an einem beweglichen Teil des Kipperaufbaus angeordnet ist.

Der Erfindung lag die Aufgabe zugrunde, einen gattungsgemässen Riegelverschluss zu schaffen, der in eine Türe, eine Klappe oder ein ähnliches Aufbauelement eines Nutzfahrzeugs eingebaut werden kann und mit dem die Türe, Klappe oder das andere bewegliche Aufbauelement gegen ein festes Aufbauteil des Nutzfahrzeugs so verriegelt werden kann, dass sich einerseits ein hohes Heranholvermögen als auch ein spielfreies Verriegeln des beweglichen Aufbauelements ergibt.

Die Aufgabe wird gemäss der Erfindung dadurch gelöst, dass die Keilfläche auf der der Einbauwanne abgewandten Seite des Riegels angeordnet ist und im von der Spitze des Riegels ausgehenden Teil steiler verläuft als im angrenzenden Teil, wobei der Riegel in Schliessstellung in eine Ausnehmung in einem festen Aufbauteil des Nutzfahrzeugs hineinragt und mit seinem weniger steilen Teil durch die Schraubendruckfeder in Anlage an eine seitliche Begrenzung der Ausnehmung gedrückt wird.

Aus der DD-A-55 561 ist ein Bordwandverschluss für Dreiseitenkipper bekannt, der ebenfalls einen federbelasteten Riegel aufweist, welcher an seiner Spitze keilförmig ausgebildet ist, wobei der von der Spitze des Riegels ausgehende Teil der Keilfläche steiler verläuft als der angrenzende Teil, und welcher in Verriegelungsstellung zwischen sich und einem Anschlagblech einen Pendelzapfen festhält. Diese in der Zeichnung dargestellte, aber in der Beschreibung nicht erwähnte Keilfläche ist aber offensichtlich nicht die Fläche, mit der der Riegel am Pendelzapfen anliegt. Es ist nämlich bei diesem Verschluss ein federbelasteter Bolzen vorgesehen, der senkrecht auf den Riegel wirkt und diesen in Richtung des als Anschlag beim Verriegeln dienenden Führungsblechs drückt. Würde eine keilförmige Fläche des Riegels am Pendelzapfen anliegen, so wäre zur Erzielung eines spielfreien Festhaltens die Wirkung des federbelasteten Bolzens nicht erforderlich. Zweitens ist die Abstützung des Riegels in der Schliessstellung derart, dass er ohne weiteres zurückweichen könnte, wenn er mit einer Keilfläche am Pendelzapfen anliegen und dieser aufgrund einer auftretenden Belastung gegen den Riegel gedrückt würde.

Beim erfindungsgemässen Verschluss besitzt der Riegel an der Spitze eine steilere Keilfläche, die in eine flachere Keilfläche übergeht. Durch den steileren Teil wird ein gutes Heranholvermögen des Verschlusses gewährleistet. Der flachere Teil liegt dagegen in Schliessstellung an einer seitlichen Begrenzung der Ausnehmung im festen Aufbauteil an und wird ständig durch die Druckschraubenfeder gegen diese Begrenzung der Ausnehmung gedrückt. Dies hat zur Folge, dass die Türe, Klappe oder das andere bewegliche Element des Aufbaus gegen das feste Aufbauelement, beispielsweise eine Anschlagleiste, gedrückt wird. Dadurch wird ein Klappern der Teile im Bereich des Riegelverschlusses oder gar ein Ausschlagen desselben vermieden. Selbstverständlich werden die Abmessungen der einzelnen Teile so gewählt, dass die Druckschraubenfeder in Schliessstellung zusammengedrückt ist und den Riegel mit seiner flacheren Keilfläche gegen die seitliche Begrenzung der Ausnehmung im festen Aufbauteil drücken kann.

Es ist zwar möglich, den Kniehebel direkt zu betätigen, aber bei einer bevorzugten Ausführungsform ist ein Kniehebelteil über das Kniegelenk hinaus verlängert, wobei die Verlängerung als Handhebel ausgebildet ist. Insbesondere ist dasjenige Kniehebelteil verlängert, das in der Einbauwanne angelenkt ist. Es wird dabei bevorzugt, dass der Riegel auf seiner Oberseite eine Mulde aufweist, die in Schliessstellung im Bereich des freien Endes des Handhebels liegt, so dass man bequem unter das Ende des Handhebels greifen kann. Hinsichtlich der federnden Ausbildung des Riegels ergibt sich eine vorteilhafte Ausführungsform, wenn man im hinteren Ende des Riegels ein Langloch vorsieht, in dem die eine Anlenkachse des Kniehebels geführt ist, und wenn man die Schraubendruckfeder in einer Ausnehmung im Riegel anordnet, wobei sich die Schraubendruckfeder einerseits am Boden der Ausnehmung und andererseits an der erwähnten Anlenkachse des Kniehebels abstützt.

Dadurch, dass sich das Kniegelenk des Kniehebels in Schliessstellung in einer Übertotpunktlage befindet, ist der Verschluss gegen unbeabsichtigtes Öffnen gesichert. Als zusätzliche Sicherung zum Totpunktüberzug kann aber der Handhebel noch durch eine eigene Feststelleinrichtung gesichert sein, wie z.B. durch eine Einrastfeder oder eine Einrastwippe.

Eine Ausführungsform des erfindungsgemässen Riegelverschlusses wird nun anhand der beigefügten Zeichnungen näher erläutert.

In den Zeichnungen zeigen:

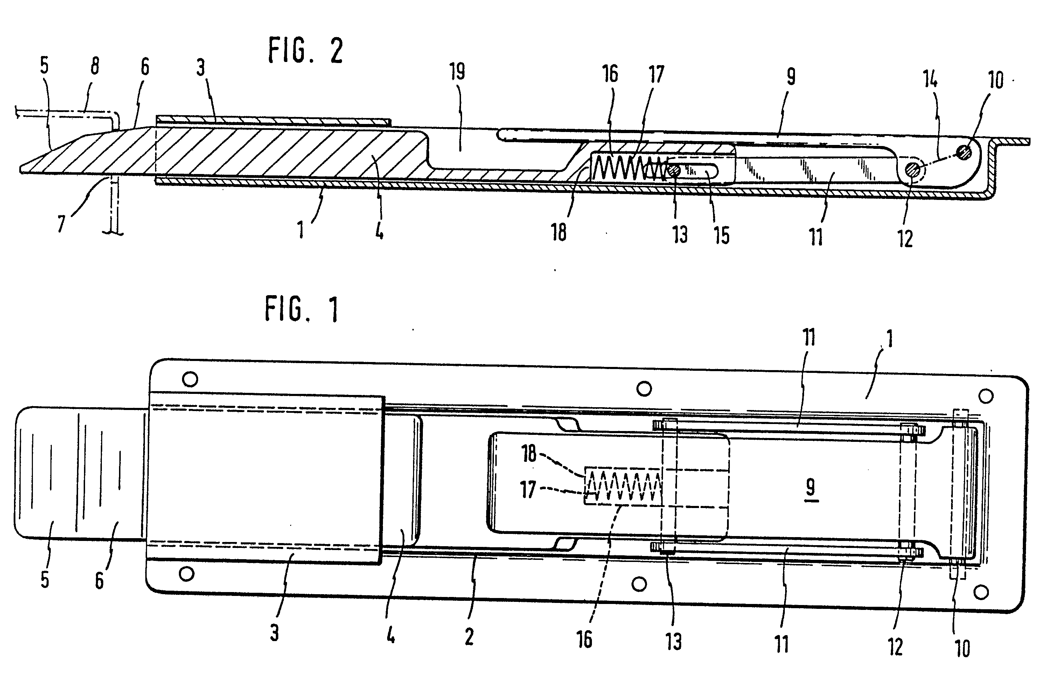

Fig. 1 eine Aufsicht auf den erfindungsgemässen Riegelverschluss; und

Fig. 2 einen Längsschnitt durch die Mitte des Riegels von Fig. 1.

Der erfindungsgemässe Riegelverschluss besitzt als Grundplatte eine Einbauwanne 1, die über fast ihre gesamte Länge eine Einbuchtung 2 aufweist, in der der Mechanismus des Riegelverschlusses angeordnet ist. Im Bereich eines Endes der Einbuchtung 2 ist eine Deckplatte 3 angeordnet, so dass ein Führungsgehäuse für einen Riegel 4 gebildet wird. Der Riegel besitzt an seinem vorderen Ende zwei Keilflächen 5 und 6, von denen die erstere eine stärkere Neigung als die zweite aufweist. Dieser Keil des Riegels greift in Schliessstellung in eine Ausnehmung 7 eines festen Aufbauteils, beispielsweise einer Runge 8, am Nutzfahrzeug ein. Die Keilfläche 5 dient zum Heranholen der Türe oder Klappe, während die Keilfläche 6 zum eigentlichen spielfreien Verriegeln der Türe oder Klappe dient.

Der Antrieb für den Riegel 4 besteht aus einem Handhebel 9, der mittels einer Achse 10 in den Seitenwandungen der Einbuchtung 2 gelagert ist, und aus einem Paar Schubstangen 11, die mittels einer Achse 12 seitlich am Handhebel angelenkt sind und die an ihrem anderen Ende über eine Achse 13 miteinander verbunden sind. Die Schubstangen 11 bilden zusammen mit dem Teil 14 des Handhebels 9, der sich zwischen den Achsen 10 und 12 erstreckt, einen Kniehebel. Wie ersichtlich, liegt die Achse 12 unterhalb einer Verbindungslinie zwischen den Achsen 10 und 13, so dass sich in Schliessstellung des Handhebels 9 eine Übertotpunktlage der Achse 12 ergibt, so dass der Handhebel 9 in der Schliessstellung festgehalten wird. Die Achse 13 ist in einem Langloch 15 im hinteren Teil des Riegels 4 geführt. In einer Ausnehmung 16 im Riegel 4 sitzt eine Schraubendruckfeder 17, die sich einerseits am Boden 18 der Ausnehmung 16 und andererseits an der Achse 13 abstützt.

Im mittleren Bereich weist der Riegel eine Mulde 19 auf, damit zum Öffnen des Handhebels 9 dieser untergriffen werden kann.

Beim Schliessen des Handhebels läuft die Keilfläche 6 auf einer seitlichen Begrenzung der Ausnehmung 7 auf, wobei es zu einem Schliessdruck auf die Türe bzw. Klappe (nicht dargestellt) kommt. Da jedoch wegen dieser Keilwirkung der Riegel nicht voll ausgefahren werden kann, wandert die Achse 13 unter Zusammendrücken der Feder 17 nach vorne. Hierdurch ergibt sich einerseits eine Nachstellreserve für den Riegel 4 und andererseits ein Drehmoment auf den Handhebel 9 in Schliessrichtung.

**Patentansprüche**

1. Riegelverschluss für Türen, Klappen oder dergleichen von Nutzfahrzeugen, mit einem in einer Einbauwanne (1) linear geführten und durch einen Kniehebel (11, 14) betätigbaren Riegel (4), der durch eine Schraubendruckfeder (17) abgestützt ist und an seinem Vorderende eine Keilfläche (5) aufweist, wobei ein Kniehebelteil (11) am Riegel (4) und das andere Kniehebelteil (16) in der Einbauwanne (1) angelenkt ist und das Kniegelenk (12) in Schliessstellung eine Übertotpunktlage einnimmt, dadurch gekennzeichnet, dass die Keilfläche (5) auf der der Einbauwanne (1) abgewandten Seite des Riegels (4) angeordnet ist und im von der Spitze des Riegels (4) ausgehenden Teil (5) steiler verläuft als im angrenzenden Teil (6), wobei der Riegel in Schliessstellung in eine Ausnehmung (7) in einem festen Aufbauteil (8) des Nutzfahrzeugs hineinragt und mit seinem weniger steilen Teil (6) durch die Schraubendruckfeder (17) in Anlage an eine seitliche Begrenzung der Ausnehmung (7) gedrückt wird.

2. Riegelverschluss nach Anspruch 1, dadurch gekennzeichnet, dass der Handhebel (9) als über das Kniegelenk (12) hinausragende Verlängerung des am Träger angelenkten Kniehebelteils (14) ausgebildet ist.

3. Riegelverschluss nach Anspruch 2, dadurch gekennzeichnet, dass der Riegel (4) auf seiner Oberseite eine Mulde (19) aufweist, die in Schliessstellung im Bereich des freien Endes des Handhebels (9) liegt.

4. Riegelverschluss nach einem der vorhergehenden Ansprüche, dadurch gekennzeichnet, dass das hintere Ende des Riegels (4) ein Langloch (15) aufweist, in dem die eine Anlenkachse (13) des Kniehebels (11, 14) geführt ist, und dass die Schraubendruckfeder (17) in einer Ausnehmung (16) im Riegel (4) angeordnet ist und sich einerseits am Boden (18) der Ausnehmung (16) und andererseits an der Anlenkachse (13) des Kniehebels (11, 14) abstützt.

5. Riegelverschluss nach einem der vorhergehenden Ansprüche, dadurch gekennzeichnet, dass der Handhebel eine Feststelleinrichtung aufweist.

**Claims**

1. A bolt lock for the doors, tailboards or like parts of utility vehicles, having a bolt (4) guided linearly in a staple (1) and which is operated by a toggle lever (11, 14) and supported by a helical compression spring (17), the bolt having at the front end thereof wedge surface (5), one part (11) of the toggle lever being hinged to the bolt (4) and the other part (16) of the toggle lever being hinged to the inside of the staple (1), the toggle joint (12) in a closed position, taking-up an over centre position, characterized by the fact that the wedge surface (5) is positioned on that side of the bolt (4) which is furthest away from the staple (1) and has a greater slope in the part (5) commencing from the nose of the bolt than in the adjoining part (6), the bolt in the closed position extending into a recess (7) in a fixed integral part (8) of the vehicle, while the lesser slope part (6) of the bolt is forced by the spring (17) to bear against a side boundary surface of the recess (7).

2. A bolt lock in accordance with Claim 1, characterized by the fact that a hand lever (9) is formed as an extension of the part (14) of the toggle lever which is hinged to the support and which extends beyond the toggle joint (12).

3. A bolt lock in accordance with Claim 2, characterized by the fact that the bolt (4) has at the top a recess (19) which in the closed position is situated in the region of the free end of the hand lever.

4. A bolt lock in accordance with any one of the preceding claims, characterized by the fact that the rear end of the bolt (4) has a slot (15) housing one fulcrum (13) of the toggle lever (11, 14), the helical spring (17) being situated in a recess (16) in the bolt (4) and bearing by one end on the base (18) of the recess (16) and by the other end on the fulcrum (13) of the toggle lever (11, 14).

5. A bolt lock in accordance with any one of the preceding claims, characterized by the fact that the hand lever is provided with a fixing device.

**Revendications**

1. Verrou de fermeture pour des battants, tels que des portes, volets ou organes analogues d'un véhicule utilitaire, ce verrou comportant un pêne (4) à mouvement rectiligne, guidé dans une cuvette (1) prévue pour être montée dans la porte ou le volet à équiper, le pêne étant actionnable par un système à genouillère (11, 14), étant sollicité par un ressort hélicoïdal (17) de compression et présentant à son extrémité antérieure une face inclinée ou rampe (5) en coin; une partie (11) du système à genouillère étant articulée sur le pêne (4), tandis que l'autre partie (14) du même système est articulée dans la cuvette (1) de guidage du pêne, avec un agencement tel qu'en position de fermeture du système à genouillère l'axe médian (12) de ce système se trouve audelà de la position d'alignement dite «position de point mort», le verrou étant caractérisé en ce que la face inclinée (5) en coin du pêne (4) est disposée du côté du flanc du pêne (4) opposé au fond de la cuvette (1) de guidage; en ce que la partie (5) partant de la pointe du pêne présente une pente plus accentuée que la partie (6) adjacente, de sorte qu'en position de fermeture le pêne est engagé dans une échancrure (7) d'une partie fixe (8) du véhicule utilitaire, et que la partie (6) à plus faible pente de la face inclinée en coin du pêne est alors maintenue en appui contre un bord latéral de l'échancrure (7), sous l'effet de la poussée du ressort hélicoïdal (17) de compression.

2. Verrou selon la revendication 1, caractérisé en ce que le levier (9) à main constitue un prolongement, s'étendant au-delà de l'axe d'articulation médian (12), de l'élément (14) du système à genouillère articulé sur son support.

3. Verrou selon la revendication 2, caractérisé en ce que le flanc supérieur du pêne (4) présente une cuvette (19), qui, en position de fermeture, se trouve en regard de l'extrémité libre du levier (9) à main.

4. Verrou selon l'une des revendications précédentes, caractérisé en ce que l'extrémité postérieure du pêne (4) présente une boutonnière (15), pour guider l'un des axes (13) d'articulation du système à genouillère (11, 14); et en ce que le ressort hélicoïdal (17) de compression est logé dans un évidement (16) du pêne, et s'appuie d'un côté sur le fond (18) de l'évidement (16), et de l'autre côté sur l'axe (13) d'articulation du système à genouillère (11, 14).

5. Verrou selon l'une des revendications précédentes, caractérisé en ce que le levier à main comporte un dispositif de maintien en position de fermeture.

FIG. 2

FIG. 1

0 066 297